# EUROPEAN PATENT SPECIFICATION

(11) **EP 2 679 928 B1**
(45) Date of publication and mention of the grant of the patent: **20.04.2016**
(21) Application number: 13177170.1
(22) Date of filing: 19.07.2013
(51) Int. Cl.: F24H 9/12, F28D 20/00

(54) **Inlet nozzle for cold water in a water heater**
Einlass-Düse für Kaltwasser in einen Wasser-Erhitzer
Tuyère d'admission pour eau froide dans un chauffe-eau

(43) Date of publication of application: 01.01.2014
(73) Proprietor: Tesy Ood, 9701 Shumen (BG)
(72) Inventor: Kyurkchiev, Zhechko Angelov, 9701 Shumen (BG)
(74) Representative: Benatov, Emil Gabriel

(56) References cited:
- DE-A1-102005 062 660
- FR-A1- 2 417 727
- GB-A- 332 401
- US-A- 2 048 068
- US-A- 2 123 809

## Description

### TECHNICAL FIELD OF THE INVENTION

The cold water inlet nozzle in a water heater is applicable for heating liquids, mainly water, used for industrial and household purposes.

### PRIOR ART

There exists a cold water inlet nozzle in electrical water heater as shown in document CN202254311. It consists of an inlet pipe with several lines of openings in its upper part. There is an end cap in the upper end of the pipe. There are disc collars between the lines of openings at the outer side of the pipe. When cold water is fed from the lower part of the nozzle, it gets dispersed through the openings in its upper part. In this way, the incoming cold water flow is not directed straight upwards. Water layers with different temperature are formed within the water volume of the water heater due to the dispersal of cold water through the inlet openings of the nozzle.

A disadvantage of this nozzle is that the numerous openings in the pipe wall cause throttling and acceleration of the cold water flow, which reduces the effectiveness of the discharge of the heated water volume.

Another disadvantage of the nozzle is that directing of the cold water flow is at 360 angular degrees, when the nozzle is close to the vertical wall of the water heater the water jets hit it, which leads to uneven mixing of cold and hot water in the water tank.

Yet another disadvantage of the nozzle is that the disc collars have a limited capacity to reflect the cold water flow in direction opposite to the incoming flow.

Another disadvantage of the nozzle is that it has a limited capacity to reduce the turbulence of the cold water flow coming out of the openings, which also leads to the uneven mixing of cold and hot water within the water tank.

Another cold water inlet nozzle is known in document US2048068.

### SUMMARY OF THE INVENTION

The aim of the invention is to create a cold water inlet nozzle in a water heater which is easy to fit into the water heater and with enhanced efficiency through uniform low speed distribution of cold water flow that leads to increase in the discharged amount of hot water.

This aim is achieved by inventing a cold water inlet nozzle in a water heater, comprising an outer pipe, in which there is a sealing through pipe. The sealing through pipe is supported from below by a fixed through cap end, by means of a retainer. In the upper part of the sealing through pipe there is a water reflector that has a support with a foot with an opening in it. There is a sealing over the upper face of the outer pipe and on the sealing is located the foot that is locked to the sealing through pipe by a locking means.

It is possible the water reflector to be a truncated sphere with a radius from 35 mm to 100 mm, truncation towards the centre of the sphere - from 0.001 mm to 45 mm and outer radius after truncation - from 10 mm to 100 mm.

It is possible the water reflector to be conical with a height from 5 to 25 mm and a base with a radius from 10 mm to 100 mm.

It is possible the water reflector to be a truncated ellipse with large semi-axis from 10 to 50 mm, small semi-axis from 0.1 mm to 25 mm, and an outer radius after truncation from 10 mm to 100 mm.

It is possible the water reflector to be a disc with a radius from 10 mm to 100 mm.

In a preferred embodiment the locking means comprises a bayonet-type lock located at the upper end of the sealing through pipe and two corresponding teeth located at the foot.

This is an invention with enhanced efficiency, providing uniform low speed distribution of cold water flow, and thus leading to increase in the discharged amount of hot water from the installed water tank.

### BRIEF DESCRIPTION OF THE DRAWINGS

The invention is disclosed in details with a preferred embodiment of cold water nozzle in a water heater, given as a non-restrictive example, with reference to the attached drawings wherein:

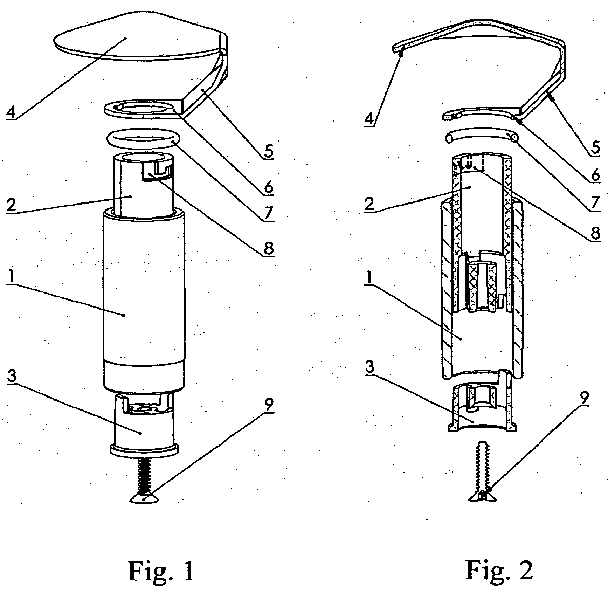

- Fig. 1 is an axonometric view of the nozzle in accordance with the invention;
- Fig. 2 is an axonometric section of the nozzle in accordance with the invention;
- Fig. 3 is a sectional view of a truncated spherical reflector with its support and foot;
- Fig. 4 is a sectional view of a conical reflector with its support and foot
- Fig. 5 is a sectional view of a truncated ellipse reflector with its support and foot
- Fig. 6 is a sectional view of a disc reflector with its support and foot

### EXEMPLARY DESCRIPTION OF THE ASSEMBLY AND OPERATION OF THE INVENTION

The cold water nozzle in a water heater presented in the figures comprises an outer pipe 1 with a sealing through pipe 2 inside that is supported from below by fixed through cap end 3. The fixed through cap end 3 is fixed to the sealing through pipe 2 by means of a retainer 9 that is preferably a threaded type. At the upper part of the sealing through pipe 2 there is a water reflector 4, which has a support 5 with a foot 6 with an opening in it. There is sealing 7 on the upper face of the outer pipe 1, and the foot 6 is located over the sealing 7, and the foot 6 is locked by a locking means to the sealing through pipe 2. The locking means comprises a lock 8, preferably a bayonet type with two symmetrical grooves, located at the upper end of the sealing through pipe 2, and two corresponding teeth at the foot 6.

It is possible the water reflector 4 to be a truncated sphere with a radius from 35 mm to 100 mm, a truncation towards the centre of the sphere from 0.001 mm to 45 mm and an outer radius after truncation from 10 mm to 100 mm. The aim of the invention is to create a cold water inlet nozzle in a water heater with enhanced efficiency through low speed uniform distribution of the cold water flow, thus leading to increase in the discharged amount of hot water.

It is possible the water reflector 4 to be conical with a height from 5 mm to 25 mm and a base with a radius from 10 mm to 100 mm.

It is possible the water reflector 4 to be a truncated ellipse with a large semi-axis from 10 mm to 50 mm, small semi-axis from 0.1 mm to 25 mm, and an outer radius after truncation from 10 mm to 100 mm.

It is possible the water reflector 4 to be a disc with a radius from 10 mm to 100 mm.

In the preferred embodiment of the invention the lock 8 is a bayonet type. However, it is also possible to be threaded type, flange type or clamp type. It is possible the retainer 9 to be bayonet type or clamp type.

The cold water inlet nozzle in a water heater operates in the following way:
Cold water is fed into the water heater through the outer pipe 1, respectively through the through cap end 3 and the sealing through pipe 2, and then it passes through the opening of the foot 6 and gets reflected by the reflector 4.

The shape of the reflector 4 is such that it reduces abruptly the speed of the cold water flow due to the great increase in the volume that it occupies after it has been reflected upon the attack of the water flow in the centre of the reflector 4. Thus uniform diffusion and low speed of the cold water flow is achieved, which leads to increase in the discharged amount of hot water from the installed water tank. The geometric apexes of the reflector 4, having axial symmetry, form laminar distribution of the reflected cold water flow and direct it in the opposite direction, thus providing enhanced efficiency of hot and cold water mixing in upward direction, and at the same time the displacement effect of hot water elevation is applied at the discharge of the electric water heater.

The various shapes and dimensions of the reflector 4 additionally contribute to achieve better effectiveness by a more uniform distribution and a lower speed of the cold water flow, thus leading to an increase in the discharged amount of hot water.

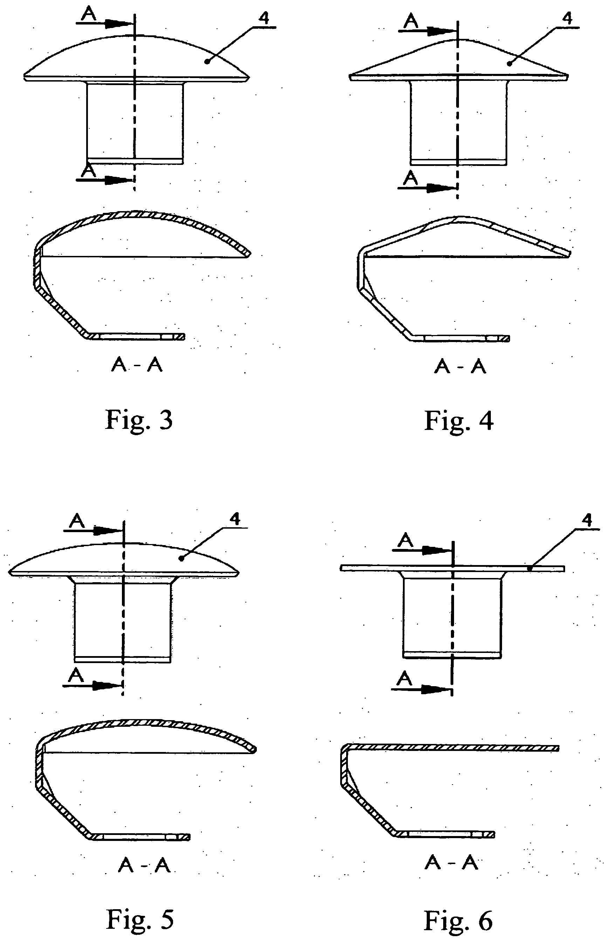

The use of a disc reflector 4 from Fig. 6 contributes to reduce the speed of the cold water flow, and the direction of the reflection being in the horizontal plane, leads to an increase in the discharged amount of hot water. Due to the geometry of the reflector's shape, there is no turbulence of the cold water flow.

The use of truncated elliptical reflector 4 from Fig. 5 leads to reduction of the speed of the cold water flow even more than the use of the disc reflector, while the direction of reflection changes from horizontal to downwards. There is an additional increase in the discharged amount of hot water in comparison to the amount discharged with disk reflector. Due to the reflector geometry, there can be cold water turbulence inside the reflector volume, but not outside.

The use of conical reflector 4 from Fig. 4 leads to reduction of the speed of the cold water flow even more than the use of the elliptical reflector 4, while the reflection tends to be in vertical direction. There is an additional increase in the discharged amount of hot water in comparison to the amount discharged with truncated elliptical reflector. Due to the reflector geometry, there can be cold water turbulence inside the reflector volume, but not outside.

The use of a truncated spherical reflector 4 from Fig. 3 leads to reduction of the speed of the cold water flow even more than the use of the conical reflector 4, while the reflection may be close to vertical direction. There is an additional increase in the discharged amount of hot water in comparison to the amount discharged with conical reflector. Due to the reflector geometry, there can be cold water turbulence inside the reflector volume, but not outside.

The outer section of the sealing through pipe 2 seals the outer pipe 1 in a secure and reliable manner. The through cap end 3 is intended to fix securely and reliably the joint to the outer pipe 1. The sealing 7 is used to seal the joint and to bring firmness after enabling the retainer 9. The lock 8 locks the foot 6 to the sealing through pipe 2 and in this way, by the lateral support 5, it provides secure alignment and precise spatial fixation of the reflector 4.

The lateral support 5 is used also as a screen for a small part of the cold water flow, and, in case the cold water inlet nozzle is located close to the side wall of the water tank, the reflection from it can be avoided, thus hampering the hot and cold water mixing in height and applying the displacement effect of hot water elevation while discharging the electrical water heater.

## Claims

1. Cold water inlet nozzle in a water heater comprising an outer pipe (1) with a water reflector (4) which has a support (5), **characterized in that** in the pipe (1) there is a sealing through pipe (2), which is supported from below by a fixed through cap end (3) by means of a retainer (9), wherein at the upper part of the sealing through pipe (2) there is the water reflector (4), which has the support (5) with a foot (6) with an opening in it, and over the upper face of the outer pipe (1) there is a sealing (7), and on the sealing (7) the foot (6) is located, which is locked by a locking means to the sealing through pipe (2).

2. Cold water inlet nozzle in a water heater, in accordance with claim 1, **characterized in that** the water reflector (4) is a truncated sphere with a radius from 35 mm to 100 mm, truncation towards the centre of the sphere from 0.001 mm to 45 mm and outer radius after truncation from 10 mm to 100 mm.

3. Cold water inlet nozzle in a water heater, in accordance with claim 1, **characterized in that** the water reflector (4) is conical with height from 5 to 25 mm and a base with radius from 10 mm to 100 mm.

4. Cold water inlet nozzle in a water heater, in accordance with claim 1, **characterized in that** the water reflector (4) is a truncated ellipse with a large semi-axis from 10 to 50 mm, small semi-axis from 0.1 mm to 25 mm and outer radius after truncation from 10 mm to 100 mm.

5. Cold water inlet nozzle in a water heater, in accordance with claim 1, **characterized in that** the water reflector (4) is a disc with radius from 10 mm to 100 mm.

6. Cold water inlet nozzle in a water heater, according to any of the preceding claims, **characterized in that** the locking means consists of a bayonet-type lock (8) located at the upper end of the sealing through pipe (2) and two corresponding teeth located on the foot (6).

## Patentansprüche

1. Kaltwassereintrittsdüse in einem Warmwasserbereiter umfassend ein Außenrohr (1) mit einem Wasserreflektor (4), der einen Träger (5) aufweist, **dadurch gekennzeichnet, dass** das Rohr (1) ein dichtendes Durchgangsrohr (2) aufweist, das von unten durch einen festen Durchgangsendstopfen (3) mittels einer Klemmschraube (9) unterstützt wird, wobei an dem oberen Teil des dichtendes Durchgangsrohr (2) ein Wasserreflektor (4) angebracht ist, der einen Träger (5) mit einem Fuß (6), der mit einer Innenbohrung versehen ist, aufweist und über die obere Stirnfläche des Außenrohres (1) sich eine Dichtung (7) befindet und über die Dichtung (7) der Fuß (6) angeordnet ist, der durch eine Verriegelungseinrichtung zum dichtenden Durchgangsrohr (2) verriegelt ist.

2. Kaltwassereintrittsdüse in einem Warmwasserbereiter, nach Anspruch 1, **dadurch gekennzeichnet, dass** der Wasserreflektor (4) eine abgeschnittene Kugel mit einem Radius von 35 mm bis 100 mm, Abschneiden in Richtung der Mitte der Kugel von 0,001 mm bis 45 mm und Außenradius nach dem Abschneiden von 10 mm bis 100 mm.

3. Kaltwassereintrittsdüse in einem Warmwasserbereiter, nach Anspruch 1, **dadurch gekennzeichnet, dass** der Wasserreflektor (4) konisch mit Höhe 5 bis 25 mm ist und eine Grundfläche mit einem Radius von 10 mm bis 100 mm hat.

4. Kaltwassereintrittsdüse in einem Warmwasserbereiter, nach Anspruch 1, **dadurch gekennzeichnet, dass** der Wasserreflektor (4) eine abgeschnittene Ellipse mit einer großen Halbachse von 10 bis 50 mm, kleine Halbachse von 0,1 mm bis 25 mm und Außenradius nach Abschneiden von 10 mm bis 100 mm.

5. Kaltwassereintrittsdüse in einem Warmwasserbereiter, nach Anspruch 1, **dadurch gekennzeichnet, dass** der Wasserreflektor (4) eine Scheibe mit einem Radius von 10 mm bis 100 mm ist.

6. Kaltwassereintrittsdüse in einem Warmwasserbereiter, nach einem der vorhergehenden Ansprüche, **dadurch gekennzeichnet, dass** die Verriegelungseinrichtung aus einem Bajonettverschluss (8) besteht, der am oberen Ende des dichtenden Durchgangsrohrs (2) angeordnet ist, und zwei sich entsprechenden Zähnen, die auf den Fuß (6) angeordnet sind.

## Revendications

1. Buse d'admission d'eau froide dans un chauffe-eau, comprenant un conduit extérieur (1) pourvu d'un réflecteur d'eau (4) muni d'un support (5), **caractérisé en ce qu'**un conduit d'étanchéité traversant (2) est à l'intérieur du conduit extérieur en étant supporté par dessous par un capuchon traversant d'extrémité (3) fixé par un moyen de retenue (9), dans lequel le réflecteur d'eau (4) est à la partie supérieure du conduit d'étanchéité traversant (2) et est pourvu du support (5) muni d'un pied (6) comportant une ouverture à son travers, un joint (7) étant au-dessus de la face supérieure du conduit extérieur (1), le pied (6) étant placé sur le joint (7) et étant verrouillé au conduit d'étanchéité traversant (2) par un moyen de verrouillage.

2. Buse d'admission d'eau froide dans un chauffe-eau selon la revendication 1, **caractérisé en ce que** le réflecteur d'eau (4) est en sphère tronquée dont le rayon est compris entre 35 mm et 100 mm, la troncature étant comprise entre 0,001 mm et 45 mm en direction du centre de la sphère et le rayon extérieur après troncature étant compris entre 10 mm et 100 mm.

3. Buse d'admission d'eau froide dans un chauffe-eau selon la revendication 1, **caractérisé en ce que** le réflecteur d'eau (4) est conique dont la hauteur est comprise entre 5 mm et 25 mm et dont la base est d'un rayon compris entre 10 mm et 100 mm.

4. Buse d'admission d'eau froide dans un chauffe-eau selon la revendication 1, **caractérisé en ce que** le réflecteur d'eau (4) est en ellipse tronquée dont un grand demi-axe est compris entre 10 mm et 50 mm, dont un petit demi-axe est compris entre 0.1 mm et 25 mm et dont un rayon extérieur après troncature est compris entre 10 mm et 100 mm.

5. Buse d'admission d'eau froide dans un chauffe-eau selon la revendication 1, **caractérisé en ce que** le réflecteur d'eau (4) est en disque dont le rayon est compris entre 10 mm et 100 mm.

6. Buse d'admission d'eau froide dans un chauffe-eau selon l'une quelconque des revendications précédentes, **caractérisé en ce que** le moyen de verrouillage est du type verrou à baïonnette (8) situé à l'extrémité supérieure du conduit d'étanchéité traversant (2) et coopérant avec deux dents situées sur le pied (6).
